# EUROPÄISCHE PATENTSCHRIFT

(11) **EP 2 272 706 B1**
(45) Veröffentlichungstag und Bekanntmachung des Hinweises auf die Patenterteilung: **11.12.2013**
(21) Anmeldenummer: 10006230.6
(22) Anmeldetag: 16.06.2010
(51) Int. Cl.: B60N 2/01, B60N 2/68

(54) **Sitzschale eines Kraftfahrzeugs sowie Verfahren zur Herstellung einer Sitzschale eines Kraftfahrzeugs**
Seat shell of a motor vehicle and method for producing same
Coquille de siège d'un véhicule automobile et procédé de fabrication d'une coquille de siège d'un véhicule automobile

(30) Priorität: 06.07.2009 DE 102009031963; 31.08.2009 DE 102009039498
(43) Veröffentlichungstag der Anmeldung: 12.01.2011
(73) Patentinhaber: Volkswagen Aktiengesellschaft, 38440 Wolfsburg (DE)
(72) Erfinder: Ehleben, Max, Dr., 38126 Braunschweig (DE); Ring, Sascha, 30177 Hannover (DE); Fuhrmann, Tino, Dr., 29413 Mehmke (DE)
(74) Vertreter: Gulde Hengelhaupt Ziebig & Schneider

(56) Entgegenhaltungen:
- EP-A1- 1 190 937
- WO-A1-2004/024424
- WO-A1-2004/024426
- DE-A1- 4 208 150
- DE-A1- 19 728 052
- DE-A1-102006 012 699
- FR-A1- 2 856 351
- US-A1- 2004 115 420

## Beschreibung

Die vorliegende Erfindung betrifft eine Sitzschale eines Kraftfahrzeugs gemäß dem Oberbegriff des Anspruchs 1 sowie ein Verfahren zur Herstellung einer Sitzschale eines Kraftfahrzeugs gemäß dem Oberbegriff des Anspruchs 9.

Eine Sitzschale und ein Verfahren der vorgenannten Art sind aus der WO 2004/024426 A1 bekannt. Darin wird ein Bauteil offenbart, das Teil einer Sitzstruktur sein kann. Das Bauteil weist erste Bereiche aus Polypropylen mit Langfasern und zweite, verstärkte Bereiche aus Polypropylen mit Endlosfasern auf. Die verstärkten Bereiche werden durch Erhitzen und anschließendes Schockkühlen separat hergestellt, bevor sie mit dem Grundmaterial verpresst werden.

Eine weitere Sitzschale ist aus der EP 1 302 360 B1 bekannt. Die darin beschriebene Sitzschale ist als ein einstückiges Schalenbauteil aus Kunststoff ausgebildet. Derartige Bauteile weisen den Nachteil auf, dass sie entweder nur eine geringe Belastbarkeit aufweisen oder aber aus vergleichsweise teuren Materialien oder sehr dickwandig gefertigt sind. Beide Alternativen sind für eine kostengünstige Serienfertigung nicht geeignet.

Das der vorliegenden Erfindung zugrunde liegende Problem ist die Schaffung einer Sitzschale der eingangs genannten Art, die bei hoher Belastbarkeit kostengünstig gefertigt werden kann. Weiterhin soll ein Verfahren zur Herstellung einer derartigen Schale angegeben werden.

Dies wird hinsichtlich der Sitzschale durch eine Sitzschale der eingangs genannten Art mit den kennzeichnenden Merkmalen des Anspruchs 1 sowie hinsichtlich des Verfahrens durch ein Verfahren der eingangs genannten Art mit den kennzeichnenden Merkmalen des Anspruchs 9 erreicht. Die Unteransprüche betreffen bevorzugte Weiterbildungen der Erfindung.

Gemäß Anspruch 1 ist vorgesehen, dass der mindestens eine zweite aus dem Verstärkungsmaterial bestehende Abschnitt in einem in Gebrauchsstellung vorderen Endbereich der Oberseite der Sitzschale und/oder in einem in Gebrauchsstellung oberen endbereich der Vorderseite der Sitzschale angeordnet ist. Auf diese Weise können die Herstellungskosten einer erfindungsgemäßen Sitzschale trotz einer hohen Belastbarkeit niedrig gehalten werden. Eine Verstärkung dieses Kantenbereichs kann das sogenannte "Submarining" beziehungsweise das unter dem Gurt Durchtauchen einer sitzenden Person bei einem Unfall vermeiden.

Insbesondere ist dabei der mindestens eine zweite Abschnitt ein Teil oder ein integraler Bestandteil der Sitzschale. Insbesondere sind weiterhin der mindestens eine erste Abschnitt und der mindestens eine zweite Abschnitt einstückig miteinander ausgebildet.

Beispielsweise kann vorgesehen sein, dass der mindestens eine zweite aus dem Verstärkungsmaterial bestehende Abschnitt in einem Bereich der Sitzschale angeordnet ist, in den während des Gebrauchs Kräfte eingeleitet werden und/oder der während des Gebrauchs höher belastet wird als andere Bereiche der Sitzschale.

Es besteht die Möglichkeit, dass das Basismaterial aus einem thermoplastischen Kunststoff, insbesondere aus Polypropylen, besteht oder einen thermoplastischen Kunststoff, insbesondere Polypropylen, umfasst. Insbesondere kann das Basismaterial ein kurzfaserverstärktes, insbesondere kurzglasfaserverstärktes, oder ein langfaserverstärktes, insbesondere langglasfaserverstärktes, Material sein. Ein derartiges Material ist kostengünstig und lässt sich einfach verarbeiten, beispielsweise im Spritzguss- oder im Heißpressverfahren.

Es besteht die Möglichkeit, dass das Verstärkungsmaterial aus einem thermoplastischen Kunststoff, insbesondere aus Polypropylen, besteht oder einen thermoplastischen Kunststoff, insbesondere Polypropylen, umfasst. Insbesondere kann das Verstärkungsmaterial ein endlosfaserverstärktes, insbesondere ein endlosglasfaserverstärktes Material, sein, bei dem die Endlosfasern vorzugsweise gerichtet sind, insbesondere sich in Richtung der Hauptbeanspruchung erstrecken. Ein derartiges Material bietet eine hohe Festigkeit und kann die Sitzschale in den kritischen Bereichen gezielt verstärken. Insgesamt ergibt sich somit eine Sitzschale, die die technische Performance von endlosfaserverstärkten Kunststoffen mit einer kostengünstigen Herstellung kombiniert.

Gemäß Anspruch 9 ist vorgesehen, dass das Verstärkungsmaterial vor dem Verpressen mit dem Basismaterial als textiles oder als plattenförmiges oder als vollkonsolidiertes oder als teilkonsolidiertes Halbzeug ausgebildet ist.

Durch das Heißpressen oder Spritzgießen lässt sich die erfindungsgemäße Sitzschale sehr wirtschaftlich in einer Serienfertigung produzieren.

Es kann dabei vorgesehen sein, dass das Verstärkungsmaterial vor dem Verpressen oder Spritzgießen mit dem Basismaterial als Gewebe oder als Gelege oder als Geflecht oder als Multiaxialgelege oder dergleichen ausgebildet ist. Vorzugsweise kann das Verstärkungsmaterial vor dem Verpressen oder Spritzgießen mit dem Basismaterial als Organoblech oder als thermoplastisches Prepreg ausgebildet sein. Derartige Halbzeuge können einfach in einer Serienfertigung verarbeitet werden und erlauben eine gezielte Anordnung der verstärkten Bereiche in der erfindungsgemäßen Sitzschale.

Im Nachfolgenden werden eine erfindungsgemäße Sitzschale und ein erfindungsgemäßes Verfahren unter Bezugsnahme auf die beiliegenden Abbildungen detailliert beschrieben. Darin zeigen
- Fig. 1: eine perspektivische Ansicht einer erfindungsgemäßen Sitzschale;
- Fig. 2: eine Detailansicht des Verstärkungsmaterials der Sitzschale gemäß Fig. 1;
- Fig. 3: eine schematische Verdeutlichung eines erfindungsgemäßen Verfahrens.

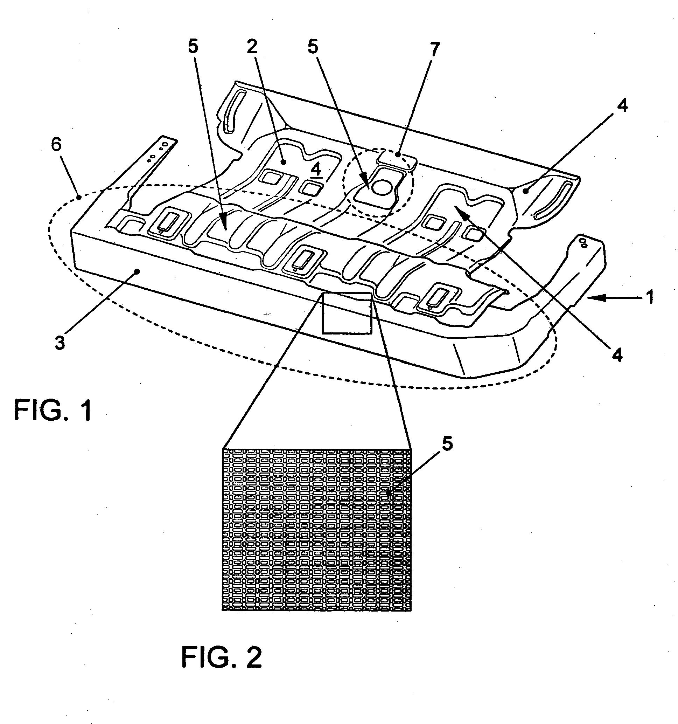

Die aus Fig. 1 ersichtliche Sitzschale 1 kann Teil einer 2/3-Rücksitzbank eines Kraftfahrzeugs sein. Es besteht jedoch durchaus die Möglichkeit, dass eine erfindungsgemäße Sitzschale Teil einer breiteren Rücksitzbank oder Teil eines Einzelsitzes ist.

Die Sitzschale 1 weist in Gebrauchsstellung eine Oberseite 2 und eine Vorderseite 3 auf, wobei die Oberseite 2 als Unterstützung der Sitzfläche dient.

Die Sitzschale 1 besteht zu großen Teilen aus einem Basismaterial und ist lokal durch ein Verstärkungsmaterial verstärkt. In Fig. 1 sind erste Abschnitte 4 und zweite Abschnitte 5 gekennzeichnet, wobei die ersten Abschnitte 4 aus dem Basismaterial und die zweiten Abschnitte 5 aus dem Verstärkungsmaterial bestehen.

Insbesondere ist dabei ein Bereich 6 der Vorderkante der Sitzschale 1 beziehungsweise sind der in Gebrauchsstellung vordere Endbereich der Oberseite 2 und der in Gebrauchsstellung obere Endbereich der Vorderseite 3 der Sitzschale 1 aus dem Verstärkungsmaterial gefertigt (in Fig. 1 gestrichelt angedeutet). Durch diese Verstärkung des Kantenbereichs soll das sogenannte "Submarining" beziehungsweise das unter dem Gurt Durchtauchen einer sitzenden Person bei einem Unfall vermieden werden.

Weiterhin ist im hinteren Teil der Oberseite 2 ein Bereich 7 aus dem Verstärkungsmaterial gefertigt. In diesem Bereich 7 werden während des Gebrauchs vermehrt Kräfte eingeleitet.

Das Basismaterial ist ein kurzfaserverstärkter oder langfaserverstärkter thermoplastischer Kunststoff. Insbesondere ist das Basismaterial kurzglasfaserverstärktes oder langglasfaserverstärktes Polypropylen. Dabei betragen die Glasfaserlängen bei der Kurzglasfaserverstärkung zwischen 0,1 mm und 0,5 mm. Bei der Langglasfaserverstärkung betragen die Glasfaserlängen zwischen 0,5 mm und 25,0 mm.

Das Verstärkungsmaterial ist ein gerichteter endlosfaserverstärkter thermoplastischer Kunststoff, bei dem die Endlosfasern sich in Richtung der Hauptbeanspruchung erstrecken. Insbesondere ist das Verstärkungsmaterial endlosglasfaserverstärktes Polypropylen. Dabei erstreckt sich die Endlosfaser im Idealfall unterbrechungsfrei durch den gesamten aus dem Verstärkungsmaterial gebildeten zweiten Abschnitt 5, mindestens jedoch unterbrechungsfrei über die größte Breite oder Länge des entsprechenden Abschnitts 5.
Fig. 2 zeigt, dass ein aus dem Verstärkungsmaterial gebildeter zweiter Abschnitt 5 eine durch Endlosfaser vorgegebene textile Struktur aufweist. Dabei kann die Endlosfaser ein Gewebe oder ein Gelege oder ein Geflecht oder ein Multiaxialgelege oder dergleichen bilden.

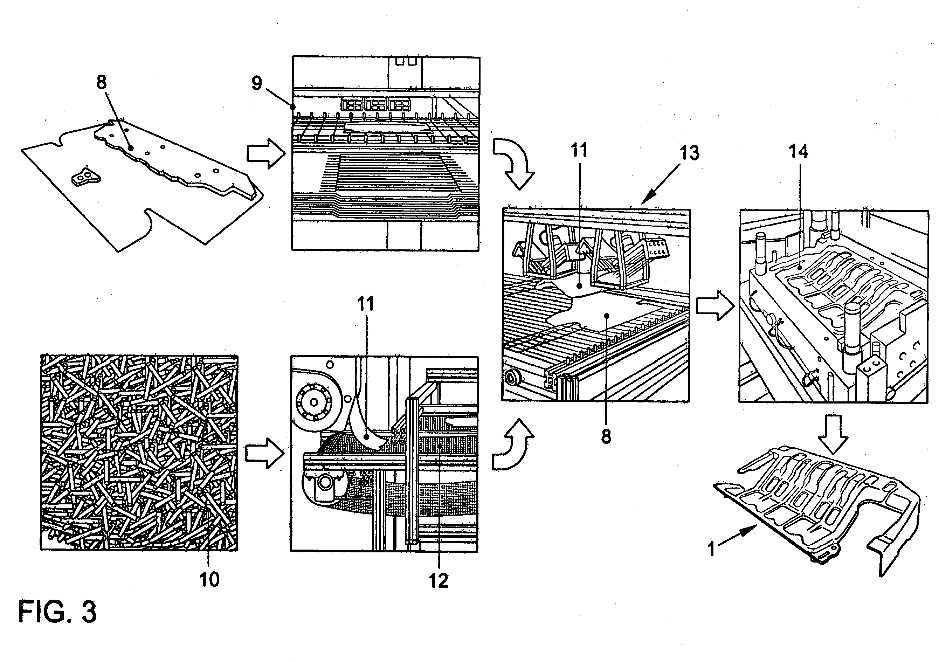

Fig. 3 zeigt schematisch die Fertigung einer erfindungsgemäßen Sitzschale 1. Das Verstärkungsmaterial liegt zu Beginn des Fertigungsprozesses als plattenförmiges oder als vollkonsolidiertes oder als teilkonsolidiertes Halbzeug vor und ist insbesondere als Organoblech oder als thermoplastisches Prepreg ausgebildet. Ein derartiges als Verstärkungs-Insert dienendes Halbzeug ist in Fig. 3 mit dem Bezugszeichen 8 versehen.

Das Verstärkungs-Insert 8 wird über ein Förderband einem Aufheizbereich 9 zugeführt und dort beispielsweise mittels einer Infrarotheizung erwärmt.

Gleichzeitig wird ein als Ausgangsmaterial für das Basismaterial dienendes Granulat 10, das beispielsweise aus Kurzglasfasern und Polypropylen besteht, extrudiert und dabei plastifiziert. Das extrudierte Plastifikat 11 aus dem Basismaterial wird auf ein Förderband 12 ausgetragen. Von diesem Förderband 12 wird das Plastifikat 11 auf das inzwischen erwärmte Verstärkungs-Insert 8 abgelegt (siehe den mit 13 gekennzeichneten Ablagebereich in Fig. 3).

Daran anschließend werden das aus dem Basismaterial bestehende Plastifikat 11 und das aus dem Verstärkungsmaterial bestehende Verstärkungs-Insert 8 von Nadelgreifern angehoben und in ein Werkzeug 14 gelegt. Bei dem Werkzeug 14 handelt es sich um ein Heißpresswerkzeug. Das Plastifikat 11 und das Verstärkungs-Insert 8 weisen zum Zeitpunkt des Einbringens in das Werkzeug 14 eine Temperatur auf, die über der Schmelzetemperatur von Polypropylen liegt. Beispielsweise weisen das Plastifikat 11 und das Verstärkungs-Insert 8 eine Temperatur von etwa 250° C auf.

In dem Werkzeug 14 werden das Plastifikat 11 und das Verstärkungs-Insert 8 durch Heißpressen miteinander verbunden und in die gewünschte Form überführt. Nach dem Öffnen des Werkzeugs 14 wird die nunmehr fertiggestellte Sitzschale 1 dem Werkzeug 14 entnommen.

Es besteht die Möglichkeit, anstelle eines Heißpresswerkzeuges ein Spritzgusswerkzeug zu verwenden. In diesem Fall wird das Verstärkungs-Insert 8 in das Werkzeug eingelegt und mit dem Basismaterial umspritzt oder hinterspritzt.

### BEZUGSZEICHENLISTE

- 1: Sitzschale
- 2: Oberseite
- 3: Vorderseite
- 4: erster Abschnitt
- 5: zweiter Abschnitt
- 6: Bereich aus Verstärkungsmaterial
- 7: Bereich aus Verstärkungsmaterial
- 8: Verstärkungs-Insert
- 9: Aufheizbereich
- 10: Granulat
- 11: Plastifikat
- 12: Förderband
- 13: Ablagebereich
- 14: Werkzeug

## Patentansprüche

1. Sitzschale (1) eines Kraftfahrzeugs, umfassend mindestens einen ersten Abschnitt (4) aus einem zumindest teilweise aus Kunststoff bestehenden Basismaterial, wobei die Sitzschale (1) mindestens einen zweiten Abschnitt (5) aus einem Verstärkungsmaterial umfasst, das widerstandsfähiger als das Basismaterial ist, **dadurch gekennzeichnet, dass** der mindestens eine zweite aus dem Verstärkungsmaterial bestehende Abschnitt (5) in einem in Gebrauchsstellung vorderen Endbereich der Oberseite (2) der Sitzschale (1) und/oder in einem in Gebrauchsstellung oberen Endbereich der Vorderseite (3) der Sitzschale (1) angeordnet ist.

2. Sitzschale (1) nach Anspruch 1, **dadurch gekennzeichnet, dass** der mindestens eine zweite aus dem Verstärkungsmaterial bestehende Abschnitt (5) in einem Bereich (6, 7) der Sitzschale (1) angeordnet ist, in den während des Gebrauchs Kräfte eingeleitet werden und/oder der während des Gebrauchs höher belastet wird als andere Bereiche der Sitzschale (1).

3. Sitzschale (1) nach einem der Ansprüche 1 oder 2, **dadurch gekennzeichnet, dass** das Basismaterial aus einem thermoplastischen Kunststoff, insbesondere aus Polypropylen, besteht oder einen thermoplastischen Kunststoff, insbesondere Polypropylen, umfasst.

4. Sitzschale (1) nach einem der Ansprüche 1 bis 3, **dadurch gekennzeichnet, dass** das Basismaterial ein kurzfaserverstärktes, insbesondere kurzglasfaserverstärktes, oder ein langfaserverstärktes, insbesondere langglasfaserverstärktes, Material ist.

5. Sitzschale (1) nach Anspruch 4, **dadurch gekennzeichnet, dass** die Länge der zur Verstärkung des Basismaterials dienenden Fasern zwischen 0,1 mm und 25,0 mm beträgt.

6. Sitzschale (1) nach einem der Ansprüche 1 bis 5, **dadurch gekennzeichnet, dass** das Verstärkungsmaterial aus einem thermoplastischen Kunststoff, insbesondere aus Polypropylen, besteht oder einen thermoplastischen Kunststoff, insbesondere Polypropylen, umfasst.

7. Sitzschale (1) nach einem der Ansprüche 1 bis 6, **dadurch gekennzeichnet, dass** das Verstärkungsmaterial ein endlosfaserverstärktes, insbesondere ein endlosglasfaserverstärktes Material, ist, bei dem die Endlosfasern vorzugsweise gerichtet sind, insbesondere sich in Richtung der Hauptbeanspruchung erstrecken.

8. Sitzschale (1) nach Anspruch 7, **dadurch gekennzeichnet, dass** die unterbrechungsfreie Länge der zur Verstärkung des Verstärkungsmaterials dienenden Fasern mindestens so groß wie die größte Breite oder Länge des mindestens einen zweiten Abschnitts (5) aus dem Verstärkungsmaterial ist.

9. Verfahren zur Herstellung einer Sitzschale (1) eines Kraftfahrzeugs, insbesondere einer Sitzschale (1) nach einem der Ansprüche 1 bis 8, umfassend folgende Verfahrensschritte:
- Einbringen eines zumindest teilweise aus Kunststoff bestehenden Basismaterials und eines Verstärkungsmaterials in ein Werkzeug (14), wobei das Verstärkungsmaterial widerstandsfähiger als das basismaterial ist;
- Überführen des in dem Werkzeug (14) befindlichen Basismaterials und des in dem Werkzeug (14) befindlichen Verstärkungsmaterials in die angestrebte Form der Sitzschale (1) durch Heißpressen oder durch Spritzgießen;
- Entnehmen der Sitzschale (1) aus dem Werkzeug (14);
**dadurch gekennzeichnet, dass** das Verstärkungsmaterial vor dem Verpressen mit dem Basismaterial als textiles oder als plattenförmiges oder als vollkonsolidiertes oder als teilkonsolidiertes Halbzeug ausgebildet ist.

10. Verfahren nach Anspruch 9, **dadurch gekennzeichnet, dass** das Basismaterial und das Verstärkungsmaterial gemeinsam in das Werkzeug (14) eingebracht werden.

11. Verfahren nach einem der Ansprüche 9 oder 10, **dadurch gekennzeichnet, dass** das Basismaterial vor dem Einbringen in das Werkzeug (14) auf das Verstärkungsmaterial aufgebracht wird.

12. Verfahren nach einem der Ansprüche 9 bis 11, **dadurch gekennzeichnet, dass** das Basismaterial und/oder das Verstärkungsmaterial vor dem Einbringen in das Werkzeug (14) erwärmt werden.

13. Verfahren nach einem der Ansprüche 9 bis 12, **dadurch gekennzeichnet, dass** das Verstärkungsmaterial vor dem Verpressen mit dem Basismaterial als als Gewebe oder als Gelege oder als Geflecht oder als Multiaxialgelege oder dergleichen ausgebildet ist.

14. Verfahren nach einem der Ansprüche 9 bis 13, **dadurch gekennzeichnet, dass** das Verstärkungsmaterial vor dem Verpressen mit dem Basismaterial als als Organoblech oder als thermoplastisches Prepreg ausgebildet ist.

## Claims

1. Seat shell (1) of a motor vehicle, comprising at least one first portion (4), of a base material consisting at least partially of plastic, the seat shell (1) comprising at least one second portion (5), of a reinforcing material that is more resistant than the base material, **characterized in that** the at least one second portion (5), consisting of the reinforcing material, is arranged in an end region of the upper side (2) of the seat shell (1) that is at the front in the position of use and/or in an end region of the front side (3) of the seat shell (1) that is at the top in the position of use.

2. Seat shell (1) according to Claim 1, **characterized in that** the at least one second portion (5), consisting of the reinforcing material, is arranged in a region (6, 7) of the seat shell (1) into which forces are introduced during use and/or which is subjected to greater loading during use than other regions of the seat shell (1).

3. Seat shell (1) according to either of Claims 1 and 2, **characterized in that** the base material consists of a thermoplastic, in particular of polypropylene, or comprises a thermoplastic, in particular polypropylene.

4. Seat shell (1) according to one of Claims 1 to 3, **characterized in that** the base material is a material reinforced with short strands, in particular reinforced with short glass strands, or a material reinforced with long strands, in particular reinforced with long glass strands.

5. Seat shell (1) according to Claim 4, **characterized in that** the length of the strands serving for the reinforcement of the base material is between 0.1 mm and 25.0 mm.

6. Seat shell (1) according to one of Claims 1 to 5, **characterized in that** the reinforcing material consists of a thermoplastic, in particular polypropylene, or comprises a thermoplastic, in particular polypropylene.

7. Seat shell (1) according to one of Claims 1 to 6, **characterized in that** the reinforcing material is material reinforced by continuous strands, in particular reinforced by continuous glass strands, in which the continuous strands are preferably oriented, in particular extend in the direction of the principal loading.

8. Seat shell (1) according to Claim 7, **characterized in that** the uninterrupted length of the strands serving for reinforcing the reinforcing material is at least as great as the greatest width or length of the at least one second portion (5) of the reinforcing material.

9. Method for producing a seat shell (1) of a motor vehicle, in particular a seat shell (1) according to one of Claims 1 to 8, comprising the following method steps:
- introducing a base material, consisting at least partially of plastic, and a reinforcing material into a mould (14), the reinforcing material being more resistant than the base material;
- transforming the base material located in the mould (14) and the reinforcing material located in the mould (14) into the desired form of the seat shell (1) by hot pressing or by injection moulding;
- removing the seat shell (1) from the mould (14); **characterized in that**, before being pressed with the base material, the reinforcing material is formed as a textile semifinished product or as a semifinished product in sheet form or as a fully consolidated or partly consolidated semifinished product.

10. Method according to Claim 9, **characterized in that** the base material and the reinforcing material are introduced together into the mould (14).

11. Method according to either of Claims 9 and 10, **characterized in that**, before being introduced into the mould (14), the base material is applied to the reinforcing material.

12. Method according to one of Claims 9 to 11, **characterized in that** the base material and/or the reinforcing material are heated before being introduced into the mould (14).

13. Method according to one of Claims 9 to 12, **characterized in that**, before being pressed with the base material, the reinforcing material is formed as a woven fabric or a nonwoven fabric or a braided fabric or a multiaxial nonwoven fabric or the like.

14. Method according to one of Claims 9 to 13, **characterized in that**, before being pressed with the base material, the reinforcing material is formed as an organometallic sheet or as a thermoplastic prepreg.

## Revendications

1. Coquille de siège (1) d'un véhicule automobile, comprenant au moins une première partie (4) en un matériau de base composé au moins partiellement de matière plastique, dans laquelle la coquille de siège (1) comprend au moins une deuxième partie (5) en un matériau de renforcement, qui est plus résistant que le matériau de base, **caractérisée en ce que** ladite au moins une deuxième partie (5) se composant du matériau de renforcement est disposée dans une région d'extrémité, située en avant dans la position d'utilisation, de la face supérieure (2) de la coquille de siège (1) et/ou dans une région d'extrémité, supérieure dans la position d'utilisation, de la face avant (3) de la coquille de siège (1).

2. Coquille de siège (1) selon la revendication 1, **caractérisée en ce que** ladite au moins une deuxième partie (5) se composant du matériau de renforcement est disposée dans une région (6, 7) de la coquille de siège (1), dans laquelle des forces sont appliquées pendant l'utilisation et/ou qui est chargée pendant l'utilisation plus fortement que d'autres régions de la coquille de siège (1).

3. Coquille de siège (1) selon une des revendications 1 ou 2, **caractérisée en ce que** le matériau de base se compose d'une matière plastique thermoplastique, en particulier de polypropylène, ou comprend une matière plastique thermoplastique, en particulier du polypropylène.

4. Coquille de siège (1) selon l'une quelconque des revendications 1 à 3, **caractérisée en ce que** le matériau de base est un matériau renforcé par des fibres courtes, en particulier renforcé par des fibres de verre courtes, ou un matériau renforcé par des fibres longues, en particulier renforcé par des fibres de verre longues.

5. Coquille de siège (1) selon la revendication 4, **caractérisée en ce que** la longueur des fibres utilisées pour le renforcement du matériau de base vaut entre 0,1 mm et 25,0 mm.

6. Coquille de siège (1) selon l'une quelconque des revendications 1 à 5, **caractérisée en ce que** le matériau de renforcement se compose d'une matière plastique thermoplastique, en particulier de polypropylène, ou comprend une matière plastique thermoplastique, en particulier du polypropylène.

7. Coquille de siège (1) selon l'une quelconque des revendications 1 à 6, **caractérisée en ce que** le matériau de renforcement est un matériau renforcé par des fibres sans fin, en particulier renforcé par des fibres de verre sans fin, dans lequel les fibres sans fin sont de préférence orientées, en particulier s'étendent dans la direction de la charge principale.

8. Coquille de siège (1) selon la revendication 7, **caractérisée en ce que** la longueur ininterrompue des fibres utilisées pour le renforcement du matériau de renforcement est au moins aussi grande que la plus grande largeur ou longueur de ladite au moins une deuxième partie (5) constituée du matériau de renforcement.

9. Procédé de fabrication d'une coquille de siège (1) d'un véhicule automobile, en particulier d'une coquille de siège (1) selon l'une quelconque des revendications 1 à 8, comportant les étapes suivantes:
- introduire un matériau de base composé au moins partiellement de matière plastique et un matériau de renforcement dans un outil (14), le matériau de renforcement étant plus résistant que le matériau de base;
- conférer au matériau de base se trouvant dans l'outil (14) et au matériau de renforcement se trouvant dans l'outil (14) la forme désirée de la coquille de siège (1) par pressage à chaud ou par moulage par injection;
- retirer la coquille de siège (1) hors de l'outil (14);
**caractérisé en ce que** le matériau de renforcement est, avant le pressage avec le matériau de base, réalisé sous la forme d'un demi-produit textile ou en forme de plaque ou entièrement consolidé ou partiellement consolidé.

10. Procédé selon la revendication 9, **caractérisé en ce que** l'on introduit le matériau de base et le matériau de renforcement en même temps dans l'outil (14) :

11. Procédé selon l'une des revendications 9 ou 10, **caractérisé en ce que** l'on dépose le matériau de base sur le matériau de renforcement avant l'introduction dans l'outil (14).

12. Procédé selon l'une quelconque des revendications 9 à 11, **caractérisé en ce que** l'on chauffe le matériau de base et/ou le matériau de renforcement avant l'introduction dans l'outil (14).

13. Procédé selon l'une quelconque des revendications 9 à 12, **caractérisé en ce que** le matériau de renforcement est, avant le pressage avec le matériau de base, réalisé sous la forme d'un tissu ou d'un non tissé ou d'un treillis ou d'un non tissé multiaxial ou analogue.

14. Procédé selon l'une quelconque des revendications 9 à 13, **caractérisé en ce que** le matériau de renforcement est, avant le pressage avec le matériau de base, réalisé sous la forme d'une tôle organique ou d'un pré-imprégné thermoplastique.
